# EUROPÄISCHE PATENTSCHRIFT

(11) **EP 3 218 149 B1**
(45) Veröffentlichungstag und Bekanntmachung des Hinweises auf die Patenterteilung: **26.01.2022**
(21) Anmeldenummer: 15805117.7
(22) Anmeldetag: 12.11.2015
(51) Int. Cl.: B25J 5/02, B23K 37/04, B25J 9/00

(54) **HALTEEINRICHTUNG, BEARBEITUNGSEINRICHTUNG UND VERFAHREN**
RETAINING DEVICE, MACHINING DEVICE AND METHOD
DISPOSITIF DE MAINTIEN, DISPOSITIF D'USINAGE ET PROCÉDÉ

(30) Priorität: 13.11.2014 DE 202014105464 U
(43) Veröffentlichungstag der Anmeldung: 20.09.2017
(73) Patentinhaber: KUKA Deutschland GmbH, 86165 Augsburg (DE)
(72) Erfinder: BROCKHOFF, Per-Olaf, 86316 Friedberg (DE); GOLDSTEIN, Christian, 86316 Friedberg (DE); RICHTER, Bernd, 86343 Königsbrunn (DE)
(74) Vertreter: Ernicke, Klaus Stefan
(86) Internationale Anmeldenummer: PCT/EP2015/076407
(87) Internationale Veröffentlichungsnummer: WO 2016/075222

(56) Entgegenhaltungen:
- EP-A1- 1 864 747
- DE-A1-102004 062 997
- JP-A- 2000 202 645
- US-A1- 2014 069 987

## Beschreibung

Die Erfindung betrifft eine Halteeinrichtung, eine Bearbeitungseinrichtung und und Bearbeitungsverfahren für ein bevorzugt langgestrecktes Werkstück Aus der Praxis ist es bekannt, ein mehrteiliges Werkstück an einer Bearbeitungsbahn mit einem Spannwerkzeug stationär und umfassend zu spannen und anschließend mit einem Industrieroboter und einem Bearbeitungswerkzeug entlang einer Bearbeitungsbahn zu bearbeiten, siehe z.B. DE 10 2004 062 997 A1.

Die US 2014/069987 A zeigt eine von einem Roboter getragene Halteeinrichtung, die mit Rollen die zu verschweißenden Werkstückteile gegenüber einem Rührwerkzeug abstützt, welches von einem anderen Roboter geführt wird. Die Rollen klemmen sich am aufrechten Steg eines Stützrahmens an und stützen mit ihren Umfangsflächen jeweils einen Wandbereich der zu schweißenden Werkstückteile.

Es ist Aufgabe der vorliegenden Erfindung, eine verbesserte Haltetechnik für ein mehrteiliges Werkstück aufzuzeigen.

Die Erfindung löst diese Aufgabe mit einer Halteeinrichtung gemäß Anspruch 1, einer Bearbeitungseinrichtung gemäß Anspruch 9 und einem Verfahren gemäß Anspruch 11.

Die beanspruchte Haltetechnik, d.h. die Halteeinrichtung und das Halteverfahren, haben den Vorteil, dass die zu bearbeitenden Werkstücke lokal an der Bearbeitungsstelle gegenseitig gespannt werden können, wobei die Spannstelle mit dem Bearbeitungsvorschub synchron mitwandert. Hierdurch kann einerseits die Haltetechnik verkleinert, vereinfacht und verbilligt werden. Besondere Vorteile ergeben sich dabei für langgestreckte Werkstückteile, die an ihren parallelen Längsrändern stumpf gestossen, gespannt und auch bearbeitet werden. Der Kontakt- und Spannbereich der Werkstückteile kann die Bearbeitungsbahn bilden oder definieren.

Die Haltetechnik kann auch für Werkstücke eingesetzt werden, die eine formschlüssige Fügezone haben. z.B. Stranggussprofile, wie sie im Wagonbau, Schiffbau oder Fahrzeugbau eingesetzt werden.

Die beanspruchte Haltetechnik ist für unterschiedliche Bearbeitungsprozesse geeignet. Besondere Vorteile bestehen bei Fügeprozessen, insbesondere Schweißprozessen. Die beanspruchte Haltetechnik kann mit besonderem Erfolg beim Rührreibschweißen eingesetzt werden, wobei die Werkstückteile am Kontakt- und Spannbereich auch geschweißt werden.

Die Halteeinrichtung 2- weist ein Spannwerkzeug und eine mehrachsige Führungseinrichtung für das Spannwerkzeug auf . Hierdurch lässt sich das Spannwerkzeug eigenständig entlang der Bearbeitungsbahn der Werkstückteile bewegen. Dies kann mittels eines eigenen Antriebs geschehen. Beim Vorschub des Spannwerkzeugs entlang der Bearbeitungsbahn können etwaige Werkstückfehler, insbesondere Formfehler, Positionierfehler oder dergleichen kompensiert werden. Mittels einer Erfassungstechnik kann andererseits das Bearbeitungswerkzeug, insbesondere der werkzeugführende Industrieroboter, dem Spannwerkzeug nachgeführt werden. Wenn sich beim Vorschub des Spannwerkzeugs die Lage der Werkstückteile und dementsprechend auch die Lage der Bearbeitungsbahn verändert, kann das Bearbeitungswerkzeug automatisch nachgeführt werden. Eine separate Sensorik oder sonstige Technik am Bearbeitungswerkzeug zum Suchen der Bearbeitungsbahn kann entfallen.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine perspektivische Ansicht einer Bearbeitungseinrichtung für ein langgestrecktes mehrteiliges Werkstück mit einer Halteeinrichtung und einem Industrieroboter,
- Figur 2:: die Halteeinrichtung und den Industrieroboter von Figur 1 in einer vergrößerten perspektivischen Detailansicht,
- Figur 3 und 4:: eine Seitenansicht und eine Draufsicht der Anordnung von Figur 2,
- Figur 5:: eine vergrößerte seitliche Detailansicht eines Spannwerkzeugs der Halteeinrichtung und eines Bearbeitungswerkzeugs und
- Figur 6:: eine rückwärtige Draufsicht auf das Spannwerkzeug und das Bearbeitungswerkzeug gemäß Pfeil VI von Figur 5.

Die Erfindung betrifft eine Halteeinrichtung (3) und ein Halteverfahren für ein mehrteiliges Werkstück (7). Die Erfindung betrifft ferner eine Bearbeitungseinrichtung (1) und ein Bearbeitungsverfahren mit einer solchen Halteeinrichtung (3) bzw. einem Halteverfahren.

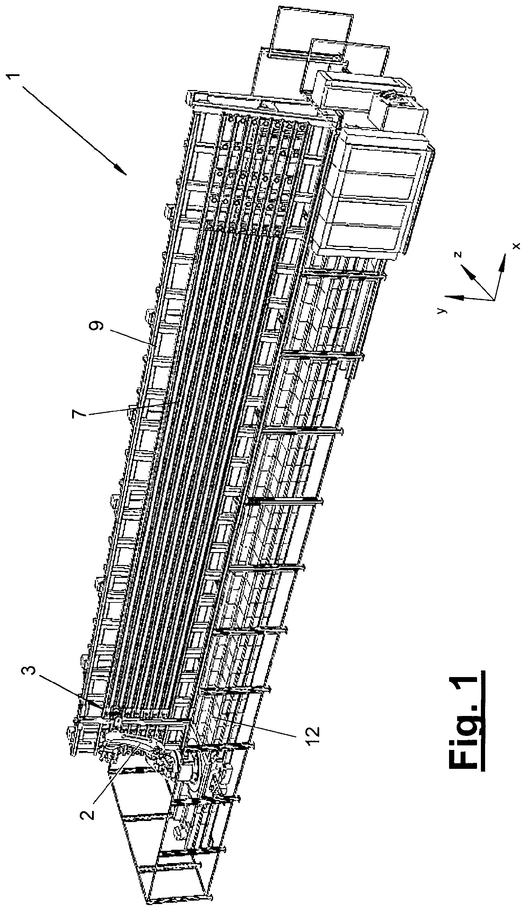

Figur 1 zeigt in perspektivischer Ansicht eine Bearbeitungseinrichtung (1) für ein mehrteiliges Werkstück (7). Hierbei handelt es sich um ein in Richtung der räumlichen x-Achse lang gestrecktes mehrteiliges Werkstück (7), welches z.B. eine plattenförmige Gestalt haben kann. Das Werkstück (7) ist z.B. als ebenes oder gewölbtes Dach eines Fahrzeuges, z.B. eines Eisenbahnwagons ausgebildet.

Das Werkstück (7) besteht aus mehreren Werkstückteilen (13,14) die z.B. als lang gestreckte schmale Profile ausgebildet sind. Die Profile sind als lange Dachpaneele mit längs laufenden Stegen ausgebildet, welche an der einen, inneren Paneelfläche angeordnet sind und hiervon quer abstehen. Sie haben bevorzugt eine rechteckige Paneel- oder Plattenform.

Die Werkstückteile (13,14) werden in der Bearbeitungseinrichtung (1) bearbeitet. Der Bearbeitungsprozess ist beliebig wählbar. Vorzugsweise handelt es sich um einen Fügeprozess, insbesondere um einen Schweißprozess. In den gezeigten Ausführungsbeispielen werden die Werkstückteile (13,14) an ihren einander zugekehrten Längsrändern durch Rührreibschweißen miteinander verbunden. Eine Mehrzahl paralleler Werkstückteile (13,14) bzw. Paneele werden dabei nacheinander miteinander verbunden und bilden dann im Verbund das Werkstück (7) bzw. das Dach.

Das mehrteilige Werkstück (7) wird von einem Industrieroboter (2) mit einem Bearbeitungswerkzeug (4) entlang einer Bearbeitungsbahn (16) bearbeitet. Die Bearbeitungsbahn (16) hat bevorzugt eine gestreckte und gerade Form und erstreckt sich im wesentlichen längs der x-Achse. Sie kann alternativ einen gebogenen Verlauf haben. Sie wird bespielsweise an den Kontaktstellen, insbesondere den Längsrändern, benachbarter Werkstückteile (13,14) ausgebildet. An dieser Bearbeitungsbahn (16) werden die Werkstückteile (13,14) stumpf miteinander gestoßen und gegenseitig mittels der Halteeinrichtung (3) verspannt. Die Verspannung kann quer zur Bearbeitungsbahn (16) gerichtet sein.

Die Halteeinrichtung (3) weist ein Spannwerkzeug (5) zum Verspannen der Werkstückteile (13,14) an der Bearbeitungsbahn (16) auf. Ferner beinhaltet die Halteeinrichtung (3) eine mehrachsige Führungseinrichtung (6) für das Spannwerkzeug (5). Mittels der Führungseinrichtung (6) kann das Spannwerkzeug (5) beim Bearbeitungsprozess relativ zum Werkstück (7) eigenständig bewegt werden. Es spannt dabei die Werkstückteile (13,14) im stumpfen Stoß zusammen.

Die Verspannung erfolgt mit örtlicher Begrenzung im Bereich der momentanen Bearbeitungsstelle (8), insbesondere der Schweißstelle. Die lokale Verspannung und die Bearbeitungsstelle (8) wandern gemeinsam bzw. synchron mit dem Vorschub des Spannwerkzeugs (5) entlang der Bearbeitungsbahn (16) bzw. x-Achse.

Die Halteeinrichtung (3) kann ferner eine bevorzugt stationäre Werkstückaufnahme (9) aufweisen. Die Werkstückaufnahme (9) weist ein Aufnahmegestell (32) mit einem bevorzugt aufrechten und längs der x-Achse sich erstreckenden Aufnahmebereich (33) für die Werkstückteile (13,14) bzw. das Werkstück (7) auf. Der Aufnahmebereich (33) kann an die Werkstückgeometrie angepasst sein. Er ist in den gezeigten Ausführungsbeispielen eben ausgebildet, wobei er alternativ z.B. auch ein- oder mehrachsig gewölbt sein kann, z.B. für ein Tonnendach.

Am Aufnahmebereich (33) können die Werkstückteile (13,14) starr oder in Spannrichtung des Spannwerkzeuges (5) beweglich gehalten werden. Das Spannwerkzeug (5) kann im zweiten Fall bei seinem Vorschub entlang der Spann- oder Bearbeitungsbahn (16) die Werkstückteile (13,14) relativ zueinander positionieren und gegenseitig verspannen.

Die Halteeinrichtung (3) kann ferner eine Steuereinrichtung (38) zum Nachführen des Bearbeitungswerkzeuges (4) an der Bearbeitungsbahn (16) aufweisen. Durch die auf die Bearbeitungsbahn (16) bezogene Führung und Positionierung des Spannwerkzeugs (5) wird auch das Bearbeitungswerkzeug (4) prozessgenau zur Bearbeitungsbahn (16) positioniert und beim Vorschub des Spannwerkzeugs (5) synchron mitbewegt.

Die Bearbeitungseinrichtung (1) kann außer der Halteeinrichtung (3) auch den Industrieroboter (2) und das von ihm geführte Bearbeitungswerkzeug (4) umfassen. Der Industrieroboter (2) kann sich in x-Richtung entlang der Werkstückaufnahme (9) bewegen. Hierauf wird nachfolgend näher eingegangen.

Das Spannwerkzeug (5) ist dazu vorgesehen und ausgebildet, parallel und nebeneinander angeordnete Werkstückteile (13,14) formschlüssig zu greifen und an ihren benachbarten Rändern, insbesondere Längsrändern, in einem stumpfen Stoß gegenseitig zu verspannen. Vorzugsweise werden hierfür jeweils zwei Werkstückteile (13,14) vom Spannwerkzeug (5) gegriffen und gespannt. Alternativ können auch mehr als zwei Werkstückteile (13,14) gegriffen und gespannt werden.

Das Spannwerkzeug (5) wird beim Vorschub entlang der Bearbeitungsbahn (16) am Werkstück (7) geführt. In den gezeigten Ausführungsbeispielen wird das Spannwerkzeug (5) entlang der bevorzugt gestreckten und längs der Werkstückteile (13,14) ausgerichteten Bearbeitungsbahn (16) geführt. Die Bearbeitungsbahn (16) ist vorzugsweise als Fügenaht, insbesondere Schweißnaht, am Werkstück (7) bzw. seinen Werkstückteilen (13,14) ausgebildet. In den gezeigten Ausführungsbeispielen werden die Werkstückteile (13,14) an den stumpf gestossenen Längsrändern und an der dortigen Bearbeitungsbahn (16) durch Rührreibschweißen miteinander verbunden. Alternativ sind andere Schweißverfahren, z.B. Laserschweißen, Lichtbogenschweißen oder dergleichen möglich.

Beim Vorschub ist das Spannwerkzeug (5) an einem Widerlager (15) des Werkstückes (7) längs der parallel dazu ausgerichteten Bearbeitungsbahn (16) geführt. Das Widerlager (15) wird in den gezeigten Ausführungsbeispielen von den längs laufenden Stegen an den Werkstückteilen (13,14) gebildet, die quer von der Paneelwand abstehen. Alternativ kann das Widerlager (15) auch von einem längs laufenden Werkstückrand gebildet werden.

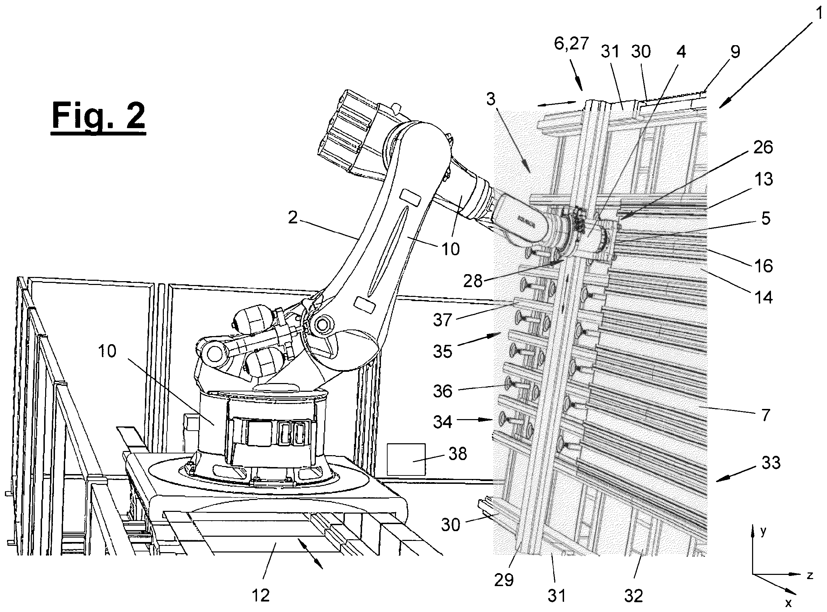

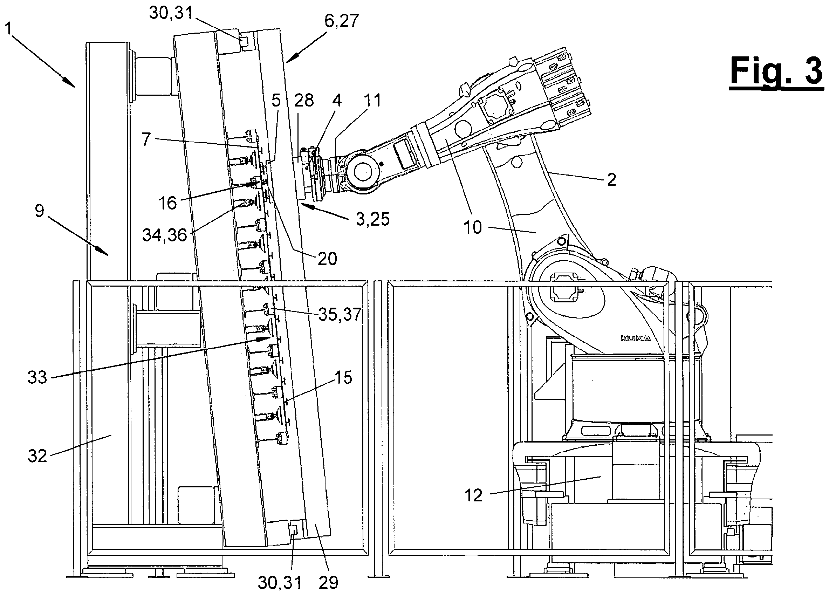

Wie Figur 2 bis 6 verdeutlichen, weist das Spannwerkzeug (5) ein Gestell (21) mit mehreren Spannelementen (22,23) auf. Die Spannelemente (22,23) treten mit dem Widerlagern (15) in einen formschlüssigen Eingriff und sind dabei gleit- oder rollfähig ausgebildet. In den gezeigten Ausführungsbeispielen sind die Spannelemente (22,23) als drehbare Andrückrollen ausgestaltet, die an den Stegen (15) außenseitig angreifen. An den profilförmig ausgebildeten Werkstückteilen (13,14) und deren Stegen können die Spannelemente (22,23) bei einer stirnseitigen axialen Zustellung aufgleiten.

Mehrere Spannelemente (22,23) sind am Gestell (21) mit gegenseitiger Distanz quer zur Bearbeitungsbahn (16) angeordnet und ausgerichtet. Sie hintergreifen die Widerlager (15) und pressen die Werkstückteile (13,14) zusammen. Ihre Anordnung und Distanz ist hierfür entsprechend adaptiert. In den gezeigten Ausführungsbeispielen sind vier Spannelemente (22,23) in zwei Paaren angeordnet. Das obere Paar von Spannelementen (22) greift am oberen Werkstückteil (13) und das untere Paar (23) am unteren Werkstückteil (14) an.

Die Spannelemente (22,23) können starr am Gestell (21) angeordnet sein. Alternativ kann eine Stelleinrichtung (25) für eine Verstellung und Werkstückanpassung des Spannwerkzeuges (5) vorhanden sein. Hierbei können z.B. die Positionen und Relativlagen der Spannelemente (22,23) manuell oder ferngesteuert bzw. automatisch und mittels eines geeigneten Antriebs der Stelleinrichtung (25) verstellt werden. Eine Verstellung ist z.B. über eine Exzenterlagerung oder auf andere Weise möglich. Die Andrückrollen (22,23) können als frei drehbare Rollen ausgebildet sein. Sie können alternativ auch mit einem Antrieb verbunden und drehend angetrieben werden. Der Vorschub des Spannwerkzeuges (5) kann dabei durch die Antriebsbewegung der Andrückrollen (22,23) bewirkt werden.

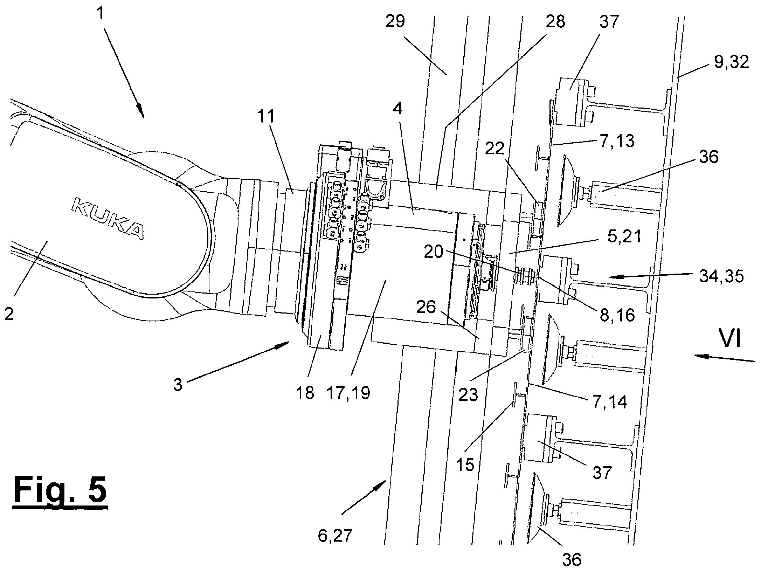

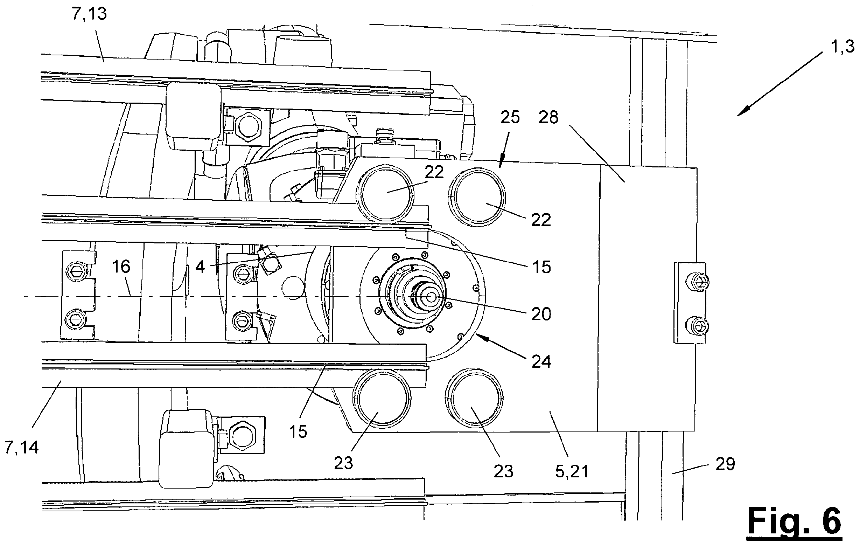

Wie Figur 5 und 6 verdeutlichen, kann das Gestell (21) des Spannwerkzeuges (5) plattenförmig ausgebildet sein. Alternativ ist eine rahmenförmige oder sonstige andere Ausbildung möglich. Das Gestell (21) ist beim Bearbeitungsprozess zwischen dem Werkstück (7) bzw. den Werkstückteilen (13,14) und dem Industrieroboter (2) bzw. dem Bearbeitungswerkzeug (4) angeordnet. Das Gestell (21) weist dabei einen Durchlass (24) für das Bearbeitungswerkzeug (5) auf. Dieser kann z.B. als kreisrunde Ausnehmung und Durchgangsöffnung im Gestell (21) ausgebildet sein.

Bei der gezeigten Bearbeitungstechnik bzw. Haltetechnik kann das Bearbeitungswerkzeug (4) dem Spannwerkzeug (5) nachgeführt werden, insbesondere in x- und y-Richtung. Hierfür ist eine Erfassungseinrichtung (26) vorgesehen und vorzugsweise dem Spannwerkzeug (5) zugeordnet. Die Erfassungseinrichtung (26) detektiert die gegenseitige Relativposition von Spannwerkzeug (5) und Bearbeitungswerkzeug (4). Die Erfassungseinrichtung (26) ist hierfür als Messeinrichtung ausgestaltet, die bevorzugt berührungslos, alternativ mit Kontakt, arbeitet.

Sie kann mehrere z.B. abstandsmessende Sensoren aufweisen. Dies können optische, induktive oder kapazitive Abstandssensoren oder auch Kontaktfühler sein.

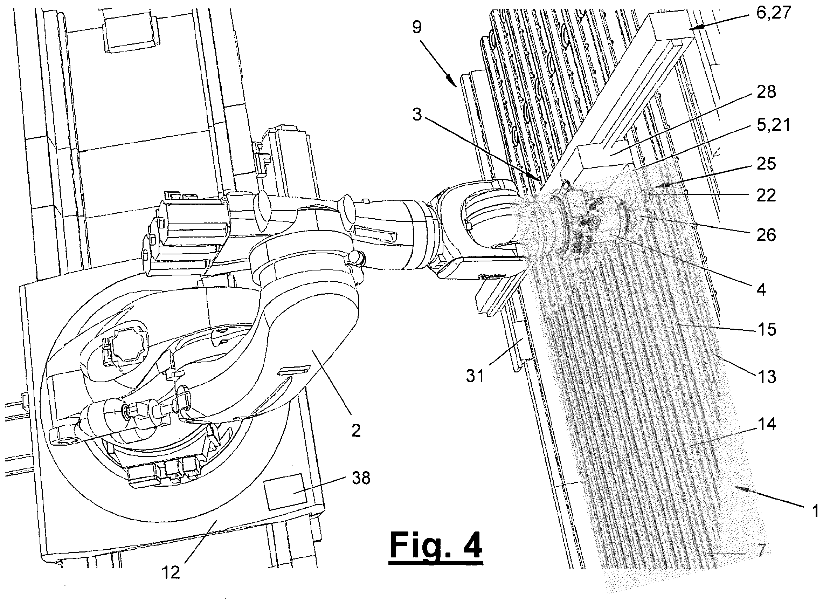

Die Erfassungseinrichtung ist mit der in Figur 2 und 4 angedeuteten Steuereinrichtung (38) signaltechnisch verbunden, z.B. drahtlos oder per Leitung. Die Steuereinrichtung (38) kann ihrerseits mit der Robotersteuerung des Industrieroboters (2) verbunden sein. Die Robotersteuerung wertet die Signale der Erfassungseinrichtung (26) aus und steuert den Industrieroboter (2) derart an, dass er das Bearbeitungswerkzeug (4) stets in der gleichen vorgebenen Relativposition gegenüber dem Spannwerkzeug (5) hält. Entsprechend des Spannwerkzeugvorschubs wird dadurch auch das Bearbeitungswerkzeug (4) vom Industrieroboter (2) entlang der Bearbeitungsbahn (16) nachgeführt. Das Spannwerkzeug (5) kann sich dabei sich quer zur Bearbeitungsbahn bewegen.

Die Erfassungseinrichtung (26) ist bevorzugt im Bereich des Durchlasses (24) und am Gestell (21) angeordnet. Die Erfassungseinrichtung (26) wird beim Vorschub des Spannwerkzeuges (5) mitbewegt. Alternativ kann die Erfassungseinrichtung (26) an anderer Stelle angeordnet sein, z.B. am Bearbeitungswerkzeug (4). Sie kann alternativ auch stationär oder als eigenständiges und an der Werkstückaufnahme (9) mitbewegtes Messsystem ausgebildet sein.

In den gezeigten Ausführungsbeispielen ist das Spannwerkzeug an einem Werkzeugträger (28) der Führungseinrichtung (6) befestigt. Die Führungseinrichtung (6) ist an der Werkstückaufnahme (9) abgestützt. Der Werkzeugträger (28) und das Spannwerkzeug (5) können über die Führungseinrichtung (6) längs und quer zu den Werkstückteilen (13,14) und zur Bearbeitungsbahn (16) bewegt und geführt werden.

Die Führungseinrichtung (6) kann in beliebig geeigneter Weise ausgebildet sein. In den gezeigten Ausführungsbeispielen ist sie als Schiebeführung (27), z.B. als Schlittenführung, ausgebildet. Der Werkzeugträger (28) kann hierbei als Schlitten ausgebildet sein. Die Schiebeführung oder Schlittenführung (27) kann eine stehende Führungsschiene (29) sowie eine liegende Führungsschiene (30) aufweisen. Die Führungsschienen (29,30) sind rechtwinklig zueinander angeordnet. Sie können jeweils mehrfach vorhanden sein. Die liegende Führungsschiene(n) (30) ist/sind längs der Bearbeitungsbahn (16) und längs der Hauptachse oder Längsachse der Werkstückteile (13,14) angeordnet bzw. ausgerichtet.

In den gezeigten Ausführungsbeispielen weist die Führungseinrichtung (6) einen eigenen Vorschubantrieb (31) auf. Diese ist z.B. an der oder den Verbindungsstelle(n) der stehenden und liegenden Führungsschienen (29,30) angeordnet. In den gezeigten Ausführungsformen ist auf der oberen und unteren liegenden Führungsschiene (30) jeweils ein Schlitten angeordnet, wobei die Schlitten ihrerseits mit der stehenden Führungsschiene (29) verbunden sind. Der Vorschubantrieb (31) kann einem oder beiden dieser Schlitten zugeordnet sein.

Alternativ kann der Vorschubantrieb (31) dem Spannwerkzeug (5) zugeordnet sein, wobei er z.B. in der vorerwähnten Weise eine oder mehreren Andrückrollen (22,23) zugeordnet ist. In einer weiteren Alternative kann die Führungseinrichtung (6) oder das Spannwerkzeug (5) eine Schleppverbindung zum Industrieroboter (2) aufweisen. Die Schleppverbindung kann den eigenen Vorschubantrieb (31) ersetzen. Der Industrieroboter (2) bewirkt hierbei den Vorschub der Führungseinrichtung (6) oder des Spannwerkzeuges (5) entlang der Längsachse bzw. Bearbeitungsbahn (16).

In den verschiedenen Ausführungsbeispielen ist der Werkzeugträger (28) an der stehenden Schiene (29) verfahrbar gehalten. Der Werkzeugträger (28) kann dabei schwimmend und gegebenenfalls mit Kompensation seines Eigengewichts an der stehenden Schiene (29) gehalten sein. Die Schlittenposition kann sich beim Vorschub entlang der Bearbeitungsbahn (16) ändern in Abhängigkeit von der jeweiligen Ausrichtung und Lage der zu bearbeitenden, bevorzugt zu fügenden Werkstückteile (13,14), insbesondere wenn diese starr und ortsfest am Aufnahmebereich (33) gehalten sind. Wenn die Werkstückteile (13,14) z.B. gegenüber der liegenden Führungsschiene (30) eine Schräglage aufweisen, verändert der Werkzeugträger (28) beim Vorschub entsprechend seine Position an der stehenden Führungsschiene (29). Die Werkstückteile (13,14) brauchen dadurch am Aufnahmebereich (33) keine hohe absolute Positionsgenauigkeit zu haben. Es genügt, wenn sie relativ zueinander spanngerecht positioniert sind.

Alternativ kann der Werkzeugträger (28) mit einem Antrieb für die Fahrbewegung entlang der stehenden Schiene (29) ausgerüstet sein. Dieser Antrieb kann steuerbar sein, um in Verbindung mit einer entsprechenden Detektionseinrichtung den Werkzeugträger (28) und das Spannwerkzeug (5) an den zu bearbeitenden, insbesondere zu fügenden, Werkstückteilen (13,14) zu positionieren.

Bei der Vorschubbewegung kann in weiterer Abwandlung mit oder ohne Antrieb die Schlittenposition des Werkzeugträgers (28) an der stehenden Schiene (29) fixiert sein, so dass eventuelle Fehlstellungen der Werkstückteile (13,14) korrigiert werden. Die Werkstückteile (13,14) können hierfür vom Spannwerkzeug (5) bewegt und entlang ihrer Hauptebene verschoben werden. Die Werkstückteile (13,14) können hierzu am Aufnahmebereich (33) in Spannrichtung des Spannwerkzeuges (5) beweglich gehalten sein.

Der Aufnahmebereich (33) der Werkstückaufnahme (9) ist bevorzugt aufrecht bzw. stehend ausgerichtet. Er kann dabei eine vertikale oder leichte schräge Ausrichtung entlang der y-Achse haben. Ein aufrechter Aufnahmebereich (33) ist für die Roboterkinematik und für die Erreichbarkeit eines großflächigen Werkstücks (7) bzw. einer Vielzahl paralleler Werkstückteile (13,14) günstig.

Die Werkstückaufnahme (9) weist am Aufnahmebereich (33) eine Fixiereinrichtung (34) und eine Stützeinrichtung (35) für das Werkstück (7) auf. Die Hauptebene des Werkstückes (7) bzw. seiner Werkstückteile (13,14) ist parallel zum Aufnahmebereich (33) ausgerichtet. Die Fixiereinrichtung (34) kann das Werkstück (7) bzw. seine Werkstückteile (13,14) ortsfest fixieren. Alternativ kann die Fixiereinrichtung (34) eine begrenzte Werkstückbewegung erlauben, insbesondere in der Hauptebene des Aufnahmebereiches (33). Dies ermöglicht die vorerwähnte Verschiebung der Werkstückteile (13,14) durch das Spannwerkzeug (5). Die Stützeinrichtung (35) stützt das Werkstück (7) bzw. seine Werkstückteile (13,14) in Richtung quer zur Hauptebene des Aufnahmebereiches (33) ab.

In den gezeigten Ausführungsbeispielen weist die Fixiereinrichtung (34) mehrere bevorzugt steuerbare Fixierelemente (36) auf, die z.B. als Sauger ausgebildet sind. Alternativ können die Fixierelemente (36) in anderer Weise, z.B. als Elektromagnete, elektrostatische Halter oder dgl. ausgebildet sein. Die z.B. in der z-Achse ausgerichteten Fixierelemente (36) wirken auf die Rückseite des Werkstückes (7) bzw. der Werkstückteile (13,14) und sind hierfür entsprechend der Werkstückgeometrie positioniert. Die Fixierelemente (36) sind z.B. punktweise oder leistenförmig mit einem gegenseitigen Abstand und in einem bevorzugt gleichmäßigen Raster am Aufnahmebereich (33) verteilt angeordnet. Die Fixiereinrichtung (34) weist ferner eine Betriebseinrichtung für die Fixierelemente (36), z.B. eine steuerbare Saug- oder Vakuumeinrichtung auf.

Die Stützeinrichtung (35) weist eine Stützunterlage (37) für das Werkstück (7) bzw. die Werkstückteile (13,14) auf. Die Stützunterlage (37) ist z.B. als Stützleiste ausgebildet, die sich längs der x-Achse erstreckt. Sie befindet sich im Bereich der Bearbeitungsbahn (16) und stützt hier die Ränder der zu fügenden Werkstückteile (13,14) von hinten her gegen die Andruckkraft des Bearbeitungswerkzeuges (4) in z-Richtung ab.

Der Industrieroboter (2) ist mehrachsig und mehrgliedrig ausgebildet und weist eine beliebige Zahl von rotatorischen und/oder translatorischen Roboterachsen auf. In den gezeigten Ausführungsbeispielen ist er als Gelenkarmroboter oder Knickarmroboter ausgebildet. Er besitzt z.B. vier Roboterglieder (10), die von einem Sockel, einer Schwinge, einem Ausleger und einer mehrachsigen Roboterhand mit einem beweglichen, vorzugsweise rotierenden Abtriebselement (11) gebildet werden. Die Roboterglieder (10) sind gelenkig miteinander verbunden. Am Abtriebselement (11) ist das Bearbeitungswerkzeug (4) fest oder lösbar angeordnet. Hierbei kann bedarfsweise eine automatische Wechselkupplung zwischengeschaltet sein.

Der Industrieroboter (2) ist mit einer Zusatzachse (12) für die Bewegung in x-Richtung entlang der Werkstückaufnahme (9) ausgerüstet. Dies kann z.B. eine lineare Fahrachse sein, wobei der Industrieroboter (2) mit seinem Sockel auf dem Schlitten der Fahrachse (12) angeordnet ist. Alternativ kann die Zusatzachse (12) als Schwingenkonstruktion oder auf andere Weise ausgebildet sein. Es kann auch mehr als eine Zusatzachse (12) vorhanden sein. Der Industrieroboter (2) weist in den gezeigten Ausführungsbeispielen sechs rotatorische Roboterachsen und eine oder mehrere Zusatzachsen (12) auf.

Das Bearbeitungswerkzeug (4) ist in den gezeigten Ausführungsbeispielen als Fügewerkzeug, insbesondere als Rührreibwerkzeug ausgebildet. Das Bearbeitungswerkzeug (4) besitzt einen Korpus (17) mit einem Roboteranschluss (18) für die Verbindung mit dem Abtriebselement (11) oder einer evtl. zwischengeschalteten automatischen Wechselkupplung. Die Betriebsmittelversorgung des Bearbeitungswerkzeugs (4) kann über die Wechselkupplung oder auf andere Weise, z.B. über eine externe Leitungszuführung, erfolgen.

Das Bearbeitungswerkzeug (4) weist ein Bearbeitungselement (20) auf, welches z.B. als Fügeelement, insbesondere als Rührreibstift, ausgebildet ist. Das Bearbeitungswerkzeug (4) weist ferner einen Antrieb (19) für die Prozessbewegung, insbesondere Drehbewegung des Bearbeitungselement (20) auf. Der Antrieb (19) kann ggf. mehrteilig ausgebildet sein und auch für die Zustellung des Bearbeitungselement (20) sorgen.

Beim Rührreibschweißen wird der Rührreibstift (20) an der Bearbeitungsbahn zwischen die benachbarten Längsränder der Werkstückteile (13,14) eingebracht und um seine Längsachse gedreht, wobei durch die entwickelte Reibungswärme die angrenzenden Werkstückbereiche plastifiziert werden. Das Bearbeitungselement (20) bzw. der Rührreibstift wird vom Industrieroboter (2) entlang der Bearbeitungsbahn (16) bewegt, wobei die Reibfront mit dem Vorschub wandert und die plastifizierten Werkstückbereiche sich in Bewegungsrichtung hinter dem Rührreibstift (20) wieder miteinander verbinden und verschweißen. Der Rührreibstift (20) kann vom Bearbeitungswerkzeug (4) mit einer Andrückkraft in z-Richtung bzw. in Normalenrichtung zu den Werkstückflächen gegen die Werkstückteile (13,14) angepresst werden.

Abwandlungen der gezeigten und beschriebenen Ausführungsformen sind in verschiedener Weise möglich. Insbesondere können die Merkmale der verschiedenen Ausführungsbeispiele beliebig miteinander kombiniert und ggf. auch vertauscht werden.

Der Aufnahmebereich (33) kann altenativ eine liegende Lage mit einer überwiegend horizontalen Richtungskomponente haben. Hierfür eignet sich ein Industrieroboter (2) mit zumindest einigen translatorischen Achsen und ggf. einer Portalkonstruktion.

### BEZUGSZEICHENLISTE

- 1: Bearbeitungseinrichtung, Fügeeinrichtung
- 2: Industrieroboter
- 3: Halteeinrichtung
- 4: Bearbeitungswerkzeug, Fügewerkzeug
- 5: Spannwerkzeug
- 6: Führungseinrichtung
- 7: Werkstück
- 8: Bearbeitungsstelle
- 9: Werkstückaufnahme
- 10: Roboterglied
- 11: Abtriebselement
- 12: Zusatzachse, Fahrachse
- 13: Werkstückteil
- 14: Werkstückteil
- 15: Widerlager, Werkstückrand, Steg
- 16: Bearbeitungsbahn, Schweißnaht
- 17: Korpus
- 18: Roboteranschluss
- 19: Antrieb
- 20: Bearbeitungselement, Fügeelement
- 21: Gestell
- 22: Spannelement, Andruckrolle
- 23: Spannelement, Andruckrolle
- 24: Durchlass
- 25: Stelleinrichtung
- 26: Erfassungseinrichtung, Messeinrichtung
- 27: Schiebeführung, Schlittenführung
- 28: Werkzeugträger, Schlitten
- 29: Führungsschiene stehend
- 30: Führungsschiene liegend
- 31: Vorschubantrieb
- 32: Aufnahmegestell
- 33: Aufnahmebereich
- 34: Fixiereinrichtung
- 35: Stützeinrichtung
- 36: Fixierelement, Sauger
- 37: Stützunterlage, Stützleiste
- 38: Steuereinrichtung

## Patentansprüche

1. Halteeinrichtung für ein bevorzugt lang gestrecktes, aus mehreren Werkstückteilen (13,14) bestehendes Werkstück (7), welches von einem Industrieroboter (2) mit einem Bearbeitungswerkzeug (4) entlang einer Bearbeitungsbahn (16) bearbeitbar ist, wobei die Halteeinrichtung (3) ein Spannwerkzeug (5) zum Verspannen der zu bearbeitenden Werkstückteile (13,14) an der Bearbeitungsbahn (16) und eine mehrachsige Führungseinrichtung (6) für das Spannwerkzeug (5) und für dessen eigenständige Bewegung relativ zum Werkstück (7) beim Bearbeitungsprozess aufweist, und wobei das Spannwerkzeug (5) dazu vorgesehen und ausgebildet ist, parallel und nebeneinander angeordnete Werkstückteile (13,14) formschlüssig zu greifen und an ihren benachbarten Rändern, insbesondere Längsrändern, in einem stumpfen Stoß gegenseitig zu verspannen.

2. Halteeinrichtung nach Anspruch 1, **dadurch gekennzeichnet, dass** die Halteeinrichtung (3) eine bevorzugt stationäre Werkstückaufnahme (9) aufweist, an der die Werkstückteile (13,14) in Spannrichtung des Spannwerkzeugs (5) beweglich gehalten sind.

3. Halteeinrichtung nach Anspruch 1 oder 2, **dadurch gekennzeichnet, dass** das Spannwerkzeug (5) beim Vorschub am Werkstück (7) geführt ist, insbesondere entlang einer bevorzugt gestreckten Bearbeitungsbahn (16), insbesondere einer Fügenaht.

4. Halteeinrichtung nach Anspruch 1, 2 oder 3, **dadurch gekennzeichnet, dass** das Spannwerkzeug (5) ein Gestell (21) mit mehreren Spannelementen (22,23), insbesondere drehbaren Andrückrollen, aufweist, wobei das Spannwerkzeug (5), insbesondere das Gestell (21), einen Durchlass (24) für das Bearbeitungswerkzeug (4) aufweist.

5. Halteeinrichtung nach einem der vorhergehenden Ansprüche, **dadurch gekennzeichnet, dass** das Spannwerkzeug (5) eine Erfassungseinrichtung (26) für das Bearbeitungswerkzeug (4) aufweist, welche die gegenseitige Relativposition von Spannwerkzeug (5) und Bearbeitungswerkzeug (4) detektiert und bevorzugt als berührungslos arbeitende Messeinrichtung ausgebildet ist.

6. Halteeinrichtung nach einem der vorhergehenden Ansprüche, **dadurch gekennzeichnet, dass** die Führungseinrichtung (6) an einer Werkstückaufnahme (9) abgestützt ist und bevorzugt als Schlittenführung (27), ausgebildet ist, die einen als Schlitten ausgebildeten Werkzeugträger (28) und eine stehende sowie eine liegende Führungsschiene (29,30) aufweist.

7. Halteeinrichtung nach einem der vorhergehenden Ansprüche, **dadurch gekennzeichnet, dass** die Führungseinrichtung (6) oder das Spannwerkzeug (5) einen eigenen Vorschubantrieb (31) oder eine Schleppverbindung zum Industrieroboter (2) aufweist.

8. Halteeinrichtung nach einem der vorhergehenden Ansprüche, **dadurch gekennzeichnet, dass** die Werkstückaufnahme (9) ein Aufnahmegestell (32) mit einem bevorzugt aufrechten Aufnahmebereich (33) für das Werkstück (7) aufweist, wobei die Werkstückaufnahme (9) am Aufnahmebereich (33) eine Fixiereinrichtung (34) und eine Stützeinrichtung (35) für das Werkstück (7) aufweist.

9. Bearbeitungseinrichtung, insbesondere Fügeeinrichtung, für ein bevorzugt lang gestrecktes mehrteiliges Werkstück (7), wobei die Bearbeitungseinrichtung (1) einen mehrachsigen, bevorzugt mit einer Zusatzachse (12), insbesondere einer linearen Fahrachse, ausgestatteten Industrieroboter (2) und ein vom Industrieroboter (2) geführtes Bearbeitungswerkzeug (4) sowie eine Halteeinrichtung (3) für das Werkstück (7) aufweist, **dadurch gekennzeichnet, dass** die Halteeinrichtung (3) nach mindestens einem der Ansprüche 1 bis 8 ausgebildet ist.

10. Bearbeitungseinrichtung nach Anspruch 9, **dadurch gekennzeichnet, dass** das Bearbeitungswerkzeug (4) mit dem Vorschub des Spannwerkzeugs (5) synchron bewegbar und dabei zur Bearbeitungsbahn (16) ausrichtbar ist, wobei das Spannwerkzeug (5) und an der entlang der Bearbeitungsbahn (16) ortsveränderlichen Bearbeitungsstelle (8) jeweils eine Spannwirkung auf das Werkstück (7) ausübt.

11. Verfahren zum Bearbeiten eines bevorzugt lang gestreckten, aus mehreren Werkstückteilen (13,14) bestehenden Werkstücks (7), welches von einem Industrieroboter (2) mit einem Bearbeitungswerkzeug (4) entlang einer Bearbeitungsbahn (16) bearbeitet und dabei mittels einer Halteeinrichtung (3) gehalten wird, wobei die zu bearbeitenden Werkstückteile (13,14) mit einem Spannwerkzeug (5) der Halteeinrichtung (3) an der Bearbeitungsbahn (16) verspannt werden, wobei das Spannwerkzeug (5) beim Bearbeitungsprozess mittels einer mehrachsigen Führungseinrichtung (6) eigenständig relativ zum Werkstück (7) bewegt wird, und wobei das Spannwerkzeug (5) parallel und nebeneinander angeordnete Werkstückteile (13,14) formschlüssig greift und an ihren benachbarten Rändern, insbesondere Längsrändern, in einem stumpfen Stoß gegenseitig verspannt.

12. Verfahren nach Anspruch 11, **dadurch gekennzeichnet, dass** die zu bearbeitenden Werkstückteile (13,14) lokal an der Bearbeitungsstelle (8) gespannt werden, wobei die Spannstelle mit dem Bearbeitungsvorschub entlang der Bearbeitungsbahn (16) synchron mitwandert und beim Bearbeitungsvorschub des Spannwerkzeugs (5) etwaige Werkstückfehler, insbesondere Formfehler, Positionierfehler oder dgl., kompensiert werden.

13. Verfahren nach Anspruch 11 oder 12, **dadurch gekennzeichnet, dass** mittels einer Erfassungstechnik das Bearbeitungswerkzeug (4), insbesondere ein werkzeugführender Industrieroboter, dem Spannwerkzeug (5) automatisch nachgeführt wird.

14. Verfahren nach Anspruch 11, 12 oder 13, **dadurch gekennzeichnet, dass** lang gestreckte Werkstückteile (13,14), die an ihren parallelen Längsrändern stumpf gestossen, gespannt und bearbeitet, insbesondere gefügt, bevorzugt rührreibgeschweisst, werden.

15. Verfahren nach einem der Ansprüche 11 bis 14, **dadurch gekennzeichnet, dass** das Bearbeitungswerkzeug (4) mit dem Vorschub des Spannwerkzeugs (5) synchron bewegt und dabei zur Bearbeitungsbahn (16) ausgerichtet wird, wobei das Spannwerkzeug (5) und an der entlang der Bearbeitungsbahn (16) ortsveränderlichen Bearbeitungsstelle (8) jeweils eine Spannwirkung auf das Werkstück (7) ausübt.

## Claims

1. Holding installation for a preferably elongate workpiece (7) which is composed of a plurality of workpiece parts (13, 14) and along a processing track (16) is able to be processed by an industrial robot (2) having a processing tool (4), wherein the holding installation (3) has a clamping tool (5) for bracing the workpiece parts (13, 14) to be processed on the processing track (16) and a multi-axis guide installation (6) for the clamping tool (5) and for the independent movement of the latter relative to the workpiece (7) during the processing procedure, and wherein the clamping tool (5) is provided and configured for gripping in a form-fitting manner workpiece parts (13, 14) that are disposed in parallel and next to one another and for mutually bracing said workpiece parts (13, 14) at the adjacent peripheries, in particular longitudinal peripheries, thereof, in a butt joint.

2. Holding installation according to Claim 1, **characterized in that** the holding installation (3) has a preferably stationary workpiece receptacle (9) on which the workpiece parts (13, 14) are held so as to be movable in the clamping direction of the clamping tool (5) .

3. Holding installation according to Claim 1 or 2, **characterized in that** the clamping tool (5) is guided on the workpiece (7) during the advancement, in particular along a preferably stretched processing track (16), in particular a joint.

4. Holding installation according to Claim 1, 2, or 3, **characterized in that** the clamping tool (5) has a frame (21) having a plurality of clamping elements (22, 23), in particular rotatable contact pressure rollers, wherein the clamping tool (5), in particular the frame (21), has a passage (24) for the processing tool (4).

5. Holding installation according to one of the preceding claims, **characterized in that** the clamping tool (5) has a detection installation (26) for the processing tool (4), said detection installation (26) detecting the mutual relative position of the clamping tool (5) and the processing tool (4) and preferably being configured as a measuring installation that operates in a non-contacting manner.

6. Holding installation according to one of the preceding claims, **characterized in that** the guide installation (6) is supported on a workpiece receptacle (6) and is preferably configured as a slide guideway (27) which has a workpiece carrier (28), configured as a slide, and one vertical and one horizontal guide rail (29, 30).

7. Holding installation according to one of the preceding claims, **characterized in that** the guide installation (6) or the clamping tool (5) has a dedicated advancement drive (41) or a drag connection to the industrial robot (2).

8. Holding installation according to one of the preceding claims, **characterized in that** the workpiece receptacle (9) has a receptacle frame (32) having a preferably vertical receptacle region (33) for the workpiece (7), wherein the workpiece receptacle (9) on the receptacle region (33) has a fixing installation (34) and a supporting installation (35) for the workpiece (7) .

9. Processing installation, in particular joining installation, for a preferably elongate workpiece (7) of multiple parts, wherein the processing installation (1) has a multi-axis industrial robot (2), preferably equipped with an additional axis (12), in particular a linear travel axis, and a processing tool (4) guided by the industrial robot (2), as well as a holding installation (3) for the workpiece (7), **characterized in that** the holding installation (3) is configured according to at least one of Claims 1 to 8.

10. Processing installation according to Claim 9, **characterized in that** the processing tool (4) is able to be moved synchronously with the advancement of the clamping tool (5) and herein is able to be aligned with the processing track (16), wherein the clamping tool (5) exerts in each case a clamping effect on the workpiece (7) at the processing location (8) that is relocatable along the processing track (16).

11. Method for processing a preferably elongate workpiece (7) which is composed of a plurality of workpiece parts (13, 14) and by an industrial robot (2) having a processing tool (4) is processed along a processing track (16) and herein is held by means of a holding installation (3), wherein the workpiece parts (13, 14) to be processed are braced by a clamping tool (5) of the holding installation (3) on the processing track (16), wherein the clamping tool (5) during the processing procedure by means of a multi-axis guide installation (6) is moved independently relative to the workpiece (7), and wherein the clamping tool (5) grips in a form-fitting manner workpieces (13, 14) that are disposed in parallel and next to one another and mutually braces said workpiece parts (13, 14) at the adjacent peripheries, in particular longitudinal peripheries, thereof, in a butt joint.

12. Method according to Claim 11, **characterized in that** the workpiece parts (13, 14) to be processed are locally clamped at the processing location (8), wherein the clamping location conjointly and synchronously with the processing advancement travels along the processing track (16), and any potential workpiece faults, in particular shaping faults, positioning faults or the like, are compensated for during the processing advancement of the clamping tool (5).

13. Method according to Claim 11 or 12, **characterized in that** the processing tool (4), in particular a tool-guiding industrial robot, by means of a detection technology automatically tracks the clamping tool (5).

14. Method according to Claim 11, 12, or 13, **characterized in that** elongate workpiece parts (13, 14) that are in abutment on the parallel longitudinal peripheries thereof are clamped and processed, in particular joined, in particular friction-stir welded.

15. Method according to one of Claims 11 to 14, **characterized in that** the processing tool (4) is moved synchronously with the advancement of the clamping tool (5) and herein is aligned with the processing track (16), wherein the clamping tool (5) exerts in each case a clamping effect on the workpiece (7) at the processing location (8) that is relocatable along the processing track (16).

## Revendications

1. Dispositif de maintien pour une pièce (7) de préférence allongée, composée de plusieurs parties de pièce (13, 14), qui peut être usinée par un robot industriel (2) doté d'un outil d'usinage (4) le long d'une trajectoire d'usinage (16), le dispositif de maintien (3) présentant un outil de serrage (5) pour serrer les parties de pièce (13, 14) à usiner sur la trajectoire d'usinage (16) et un dispositif de guidage multiaxial (6) pour l'outil de serrage (5) et pour le déplacement autonome de celui-ci par rapport à la pièce (7) lors du processus d'usinage, et l'outil de serrage (5) étant prévu et réalisé pour saisir par complémentarité de forme des parties de pièce (13, 14) disposées en parallèle et côte à côte et pour les serrer au niveau de leurs bords voisins, en particulier de leurs bords longitudinaux, en butée bout à bout les unes contre les autres.

2. Dispositif de maintien selon la revendication 1, **caractérisé en ce que** le dispositif de maintien (3) présente un logement de pièce (9), de préférence stationnaire, au niveau duquel les parties de pièce (13, 14) sont maintenues de manière mobile dans la direction de serrage de l'outil de serrage (5).

3. Dispositif de maintien selon la revendication 1 ou 2, **caractérisé en ce que** l'outil de serrage (5) est guidé sur la pièce (7) pendant l'avance, en particulier le long d'une trajectoire d'usinage (16) de préférence allongée, en particulier d'un joint d'assemblage.

4. Dispositif de maintien selon la revendication 1, 2 ou 3, **caractérisé en ce que** l'outil de serrage (5) présente un bâti (21) doté de plusieurs éléments de serrage (22, 23), en particulier de galets-presseurs rotatifs, l'outil de serrage (5), en particulier le bâti (21), présentant un passage (24) pour l'outil d'usinage (4).

5. Dispositif de maintien selon l'une quelconque des revendications précédentes, **caractérisé en ce que** l'outil de serrage (5) présente un dispositif de détection (26) pour l'outil d'usinage (4) qui détecte la position relative mutuelle de l'outil de serrage (5) et de l'outil d'usinage (4) et est de préférence réalisé comme un dispositif de mesure fonctionnant sans contact.

6. Dispositif de maintien selon l'une quelconque des revendications précédentes, **caractérisé en ce que** le dispositif de guidage (6) prend appui sur un logement de pièce (9) et est réalisé de préférence comme un guidage de chariot (27) qui présente un porte-outil (28) réalisé sous forme de chariot et un rail de guidage vertical et un rail de guidage horizontal (29, 30) .

7. Dispositif de maintien selon l'une quelconque des revendications précédentes, **caractérisé en ce que** le dispositif de guidage (6) ou l'outil de serrage (5) présente son propre entraînement d'avance (31) ou une connexion de remorque avec le robot industriel (2).

8. Dispositif de maintien selon l'une quelconque des revendications précédentes, **caractérisé en ce que** le logement de pièce (9) présente un bâti de réception (32) doté d'une zone de réception (33) de préférence verticale pour la pièce (7), le logement de pièce (9) présentant dans la zone de réception (33) un dispositif de fixation (34) et un dispositif d'appui (35) pour la pièce (7).

9. Dispositif d'usinage, en particulier dispositif d'assemblage, pour une pièce (7) de préférence allongée, en plusieurs parties, le dispositif d'usinage (1) présentant un robot industriel multiaxial (2) équipé de préférence d'un axe supplémentaire (12), en particulier d'un axe mobile linéaire, et un outil d'usinage (4) guidé par le robot industriel (2) ainsi qu'un dispositif de maintien (3) pour la pièce (7), **caractérisé en ce que** le dispositif de maintien (3) est réalisé selon l'une quelconque des revendications 1 à 8.

10. Dispositif d'usinage selon la revendication 9, **caractérisé en ce que** l'outil d'usinage (4) peut être déplacé de manière synchrone avec l'avance de l'outil de serrage (5) tout en pouvant être aligné sur la trajectoire d'usinage (16), l'outil de serrage (5) exerçant au point d'usinage (8) déplaçable le long de la trajectoire d'usinage (16) respectivement un effet de serrage sur la pièce (7).

11. Procédé d'usinage d'une pièce (7) de préférence allongée, composée de plusieurs parties de pièce (13, 14), qui est usinée par un robot industriel (2) par un outil d'usinage (4) le long d'une trajectoire d'usinage (16) tout en étant maintenue au moyen du dispositif de maintien (3), les parties de pièce (13, 14) à usiner étant serrées par un outil de serrage (5) du dispositif de maintien (3) sur la trajectoire d'usinage (16), l'outil de serrage (5) étant déplacé de manière autonome lors du processus d'usinage au moyen d'un dispositif de guidage multiaxial (6) par rapport à la pièce (7), et dans lequel l'outil de serrage (5) saisit par complémentarité de forme des parties de pièce (13, 14) disposées en parallèle et côte à côte et les serre au niveau de leurs bords voisins, en particulier de leurs bords longitudinaux, en butée bout à bout les unes contre les autres.

12. Procédé selon la revendication 11, **caractérisé en ce que** les parties de pièce (13, 14) à usiner sont serrées localement au point d'usinage (8), le point de serrage accompagnant de manière synchrone l'avance d'usinage le long de la trajectoire d'usinage (16), et lors de l'avance d'usinage de l'outil de serrage (5), d'éventuels défauts de pièce, en particulier des défauts de forme, des défauts de positionnement ou similaires, sont compensés.

13. Procédé selon la revendication 11 ou 12, **caractérisé en ce qu'**au moyen d'une technique de détection, l'outil d'usinage (4), en particulier un robot industriel guidant un outil, est asservi automatiquement à l'outil de serrage (5).

14. Procédé selon la revendication 11, 12 ou 13, **caractérisé en ce que** des parties de pièce allongées (13, 14) qui sont en butée bout à bout au niveau de leurs bords longitudinaux parallèles sont serrées et usinées, en particulier assemblées, de préférence soudées par friction-malaxage.

15. Procédé selon l'une quelconque des revendications 11 à 14, **caractérisé en ce que** l'outil d'usinage (4) est déplacé de manière synchrone avec l'avance de l'outil de serrage (5) tout en étant aligné sur la trajectoire d'usinage (16), l'outil de serrage (5) exerçant au point d'usinage (8) déplaçable le long de la trajectoire d'usinage (16) respectivement un effet de serrage sur la pièce (7).
